# FASCICULE DE BREVET EUROPEEN

(11) **EP 3 123 673 B1**
(45) Date de publication et mention de la délivrance du brevet: **02.05.2018**
(21) Numéro de dépôt: 15713871.0
(22) Date de dépôt: 27.03.2015
(51) Int. Cl.: H04W 40/02, H04W 84/22, H04W 88/06

(54) **PROCÉDÉ DE ROUTAGE DE DONNÉES PAR UN BOITIER D'ACCÈS À INTERNET**
VERFAHREN ZUM ROUTEN VON DATEN DURCH EINEN INTERNETZUGANGSKASTEN
METHOD FOR ROUTING DATA THROUGH AN INTERNET ACCESS BOX

(30) Priorité: 28.03.2014 FR 1452753
(43) Date de publication de la demande: 01.02.2017
(73) Titulaire: Bouygues Telecom, 75116 Paris (FR)
(72) Inventeur: RAYNAUD, Nicolas, F-92290 Chatenay Malabry (FR); HERVO, Vincent, F-92100 Boulogne Billancourt (FR)
(74) Mandataire: Regimbeau
(86) Numéro de dépôt international: PCT/EP2015/056805
(87) Numéro de publication internationale: WO 2015/144917

(56) Documents cités:
- WO-A1-2012/099762
- GROCHLA K ET AL: "Autoconfiguration procedures for multiradio wireless mesh networks based on DHCP protocol", WORLD OF WIRELESS, MOBILE AND MULTIMEDIA NETWORKS&WORKSHOPS, 2009. WOWMOM 2009. IEEE INTERNATIONAL SYMPOSIUM ON A, IEEE, PISCATAWAY, NJ, USA, 15 juin 2009 (2009-06-15), pages 1-6, XP031543604, ISBN: 978-1-4244-4440-3
- FORD ROKE MANOR RESEARCH C RAICIU M HANDLEY UNIVERSITY COLLEGE LONDON A: "TCP Extensions for Multipath Operation with Multiple Addresses; draft-ietf-mptcp-multiaddressed-01.txt", TCP EXTENSIONS FOR MULTIPATH OPERATION WITH MULTIPLE ADDRESSES; DRAFT-IETF-MPTCP-MULTIADDRESSED-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 12 juillet 2010 (2010-07-12), pages 1-43, XP015070034,

## Description

### DOMAINE TECHNIQUE GENERAL

La présente invention concerne le domaine des réseaux opérateurs.

Plus précisément, elle concerne un procédé de routage de données par un boitier d'accès à Internet.

### ETAT DE L'ART

On connait des dispositifs permettant à un utilisateur d'accéder de façon nomade à Internet via un réseau de communication mobile.

Ces dispositifs, couramment appelés « clé/modem/galet 3G/4G » (selon la technologie du réseau de communication mobile auquel ils se connectent et la connectivité qu'ils offrent), sont des routeurs prenant la forme d'un boitier de petite taille équipé d'une ou plusieurs antennes internes, d'une carte SIM (« Subscriber Identity Module ») d'un opérateur du réseau de communication mobile, et disposant de moyens de connexion avec un ou plusieurs équipements auquel le dispositif fournit un accès à Internet.

Aujourd'hui, cette connexion est le plus souvent de type Wi-Fi, après n'avoir été longtemps qu'une connexion filaire de type USB (« Universal Serial Bus »), d'où la dénomination « clé » (des connectivités sans/avec fil peuvent coexister sur un routeur).

Pour mettre en oeuvre une communication sans fil, le routeur présente des fonctionnalités de « wireless Access Point » (AP, en français Point d'Accès), c'est-à-dire qu'il est adapté pour générer un réseau Wi-Fi (alternativement, Bluetooth ou d'autres protocoles peuvent être utilisés) auquel les équipements de l'utilisateur vont pouvoir se connecter (l'utilisateur définit le plus souvent un mot de passe pour éviter que des équipements tiers ne profitent indûment de ce réseau sans fil).

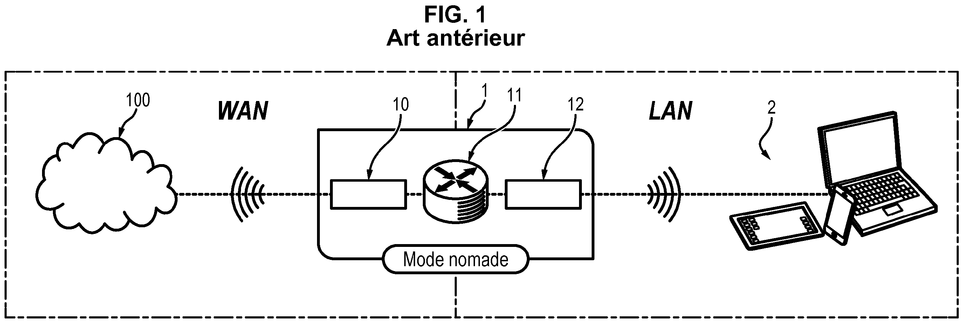

La **figure 1** représente un exemple connu de routeur de type AP. Ce routeur 1 comprend des premiers moyens de communication sans fil 10, des moyens de traitement de données 11 et des deuxièmes moyens de communication sans fil 12, disposés dans un boitier. Une batterie et/ou une alimentation filaire est également présente.

Les premiers moyens de communication sans fil 10 permettent la connexion au réseau de communication mobile 100 (réseau 3G UMTS « Universal Mobile Télécommunications System », 3G+ HSPA « High Speed Packet Access », 4G LTE « Long Term Evolution », ou autres), et reçoit généralement comme expliqué une carte SIM de l'opérateur de ce réseau mobile. Ce réseau de communication mobile 100 est un réseau opérateur à grande échelle (réseau WAN, « Wide Area Network ») lui-même connecté au réseau Internet.

Ces moyens de communication sans fil 10 sont connectés aux moyens de traitement de données 11 (qui réalisent les opérations de routage), eux-mêmes reliés aux deuxièmes moyens de communication sans fil 12.

Ces derniers assurent la connexion du dispositif 1 à un équipement 2. Les deuxièmes moyens de communication sans fil 12 (qui peuvent être éventuellement partiellement confondu avec les premiers moyens de communication sans fil 10, par exemple en partageant une antenne) génèrent un réseau sans fil local (réseau LAN, « Local Area Network »), par exemple Wi-Fi, auquel un équipement 2 peut se connecter. C'est le mode AP évoqué précédemment.

Ces routeurs de type AP apportent satisfaction, et la connexion sans fil offre de nombreux avantages. En particulier, d'une part l'accès à Internet peut être fourni à une pluralité d'équipements simultanément, et d'autre part la portée moyenne du Wi-Fi fait qu'il possible d'éloigner le dispositif de sorte à le placer en un endroit où la réception du réseau de communication mobile 100 est la meilleure (par exemple en hauteur, loin de tout objet métallique, etc.).

On constate même que les routeurs adaptés aux réseaux mobiles de technologie récente (en particulier les routeurs 4G) peuvent fournir des débits parfois supérieurs aux accès Internet classiques via des routeurs de type IAD (« Integrated Access Device ») proposés par les fournisseurs d'accès à internet et communément appelés « box ».

Les réseaux opérateur (WAN) qu'utilisent ces boitiers d'accès à Internet sont en effet encore souvent des réseaux filaires de type xDSL (« Digital Subscriber Line », utilisant le réseau téléphonique), bien moins performants que les réseaux de type FTTH (« Fiber To The Home », utilisant la fibre optique).

Dans la mesure où de nombreux foyers n'ont pas encore la possibilité de bénéficier d'une connexion à la fibre optique, il a ainsi été proposé d'utiliser les routeurs 4G pour renforcer les débits des box connectées uniquement en xDSL. L'idée est de fournir une deuxième route d'accès à Internet aux équipements connectés à ces box : c'est ce que l'on appelle le « Multipath », voir par exemple les documents WO 2012/099762, ou Ford Roke Manor Research C. Raiciu M. Handley University College London: « TCP extensions for Multipath Opération with Multiple Adresses ». Toutefois, cette solution rencontre des difficultés pratiques :
- soit le routeur 4G est connècté par un câble au routeur xDSL (i.e. la box), et dans ce cas-là on constate qu'il est difficile de le placer en un endroit ou la réception du réseau de communication sans fil est la meilleure, et on perd l'intérêt du routeur 4G (le débit offert via le réseau mobile chute) ;
- soit le routeur 4G est connecté en Wi-Fi au routeur xDSL, et une bande de fréquence 2.4 ou 5 Ghz (une des deux bandes autorisées) doit être condamnée pour le trafic inter-routeurs, ce qui limite le débit au lieu de l'augmenter.

Il serait ainsi souhaitable de disposer d'une solution simple, efficace et fiable de renforcement du débit d'un routeur xDSL par un routeur 4G.

### PRESENTATION DE L'INVENTION

Selon un premier aspect, la présente invention se rapporte donc à un procédé de routage de données par un boitier d'accès à Internet connecté à Internet via un réseau de communication filaire, caractérisé en ce qu'il comprend des étapes de :
(a) Connexion à un réseau local sans fil généré par le boitier d'accès à Internet, d'un dispositif d'accès à Internet connecté à Internet via un réseau de communication mobile (100) ;
(b) Emission par des moyens de traitement de données du dispositif d'une requête d'attribution d'une adresse réseau auprès du boitier, ladite requête comprenant un paramètre représentatif d'une capacité du dispositif à fournir un accès à Internet ;
(c) Génération par des moyens de traitement de données du boitier d'une table associée au dispositif de routage via le réseau de communication mobile, ladite table associée au dispositif et au moins une table associée au boitier de routage via le réseau de communication filaire étant stockées sur des moyens de stockage de données du boitier ;
(d) Routage par les moyens de traitement de données du boitier desdites données via le réseau de communication filaire et/ou le réseau de communication mobile en utilisant les tables de routage stockées sur les moyens de stockage de données du boitier.

Selon d'autres caractéristiques avantageuses et non limitatives du procédé selon le premier aspect :
- ladite requête émise à l'étape (c) est une requête Dynamic Host Control Protocol (DHCP) ;
- ledit paramètre représentatif d'une capacité du dispositif à fournir un accès à Internet est un argument d'une option 60 de la requête DHCP.
- ledit argument d'une option 60 de la requête DHCP est la chaine de caractères 'EXTWAN' ;
- l'étape (c) est précédée par une étape (c0) de réception par le dispositif d'une offre DHCP émise par les moyens de traitement de données du boitier d'accès à Internet, la requête DHCP de l'étape (c) étant une réponse à l'offre DHCP ;
- l'étape (d) comprend le choix par les moyens de traitement de données du boitier de l'une ou l'autre des tables en fonction de règles stockées sur les moyens de stockage de données du boitier, de sorte à repartir entre le réseau de communication filaire et le réseau de communication mobile des flux IP composant les données à router ;
- l'étape (d) comprend l'ouverture de sessions Multi-Path Transport Control Protocol (MPTCP) par les moyens de traitement de données du boitier de sorte à répartir entre le réseau de communication filaire et le réseau de communication mobile des sous-flux TCP des flux IP composant les données à router ;
- le dispositif comprend des premiers moyens de communication sans fil via le réseau de communication mobile et des deuxièmes moyens de communication sans fil, le dispositif étant configuré pour présenter une première configuration (AP) dans laquelle les deuxièmes moyens de communication sans fil génèrent un réseau local sans fil et une deuxième configuration (STA) dans laquelle les deuxièmes moyens de communication sans fil sont aptes à se connecter à un réseau local sans fil, le procédé comprenant une étape préalable (a0) de passage de la première à la deuxième configuration du dispositif ;
- le dispositif comprend des moyens de détection d'une insertion sur un support, l'étape (a0) étant mise en oeuvre lorsque ladite insertion est détectée ;
- le dispositif est configuré pour ne passer de la première configuration à la deuxième configuration que s'il détecte un réseau local sans fil généré par les moyens de communication sans fil dudit boitier d'accès à Internet.

Un deuxième aspect de l'invention concerne un boitier d'accès à Internet connecté à Internet via un réseau de communication filaire, comprenant des moyens de communication sans fil générant un réseau local sans fil et des moyens de stockage de données sur lesquels est stockée au moins une table associée au boitier de routage via le réseau de communication filaire, caractérisé en ce qu'il comprend en outre des moyens de traitement de données configurés pour mettre en oeuvre :
- Un module de réception d'une requête d'attribution d'une adresse réseau auprès du boitier depuis un dispositif d'accès à Internet connecté à Internet via un réseau de communication mobile et connecté audit réseau local sans fil ;
- Un module de génération et de stockage sur lesdits moyens de stockage de données, si la requête reçue comprend un paramètre représentatif d'une capacité du dispositif à fournir un accès à Internet, d'une table associée au dispositif de routage via le réseau de communication mobile ;
- Un module de routage de données via le réseau de communication filaire et/ou le réseau de communication mobile en utilisant les tables de routage stockées sur les moyens de stockage de données.

Un troisième aspect de l'invention concerne un système comprenant un boitier d'accès à Internet selon le deuxième aspect et un dispositif d'accès à Internet connecté à Internet via un réseau de communication mobile.

Selon d'autres caractéristiques avantageuses et non limitatives du système selon le troisième aspect :
- le dispositif comprend des premiers moyens de communication sans fil avec le réseau de communication mobile et des deuxièmes moyens de communication sans fil, le dispositif présentant une première configuration (AP) dans laquelle les deuxièmes moyens de communication sans fil génèrent un réseau local sans fil et une deuxième configuration (STA) dans laquelle les deuxièmes moyens de communication sans fil sont aptes à se connecter à un réseau local sans fil ;
- le système comprend en outre un support dudit dispositif d'accès à Internet, le dispositif étant configuré pour passer de la première configuration à la deuxième configuration lorsqu'il est placé sur ledit support.

Selon un quatrième et un cinquième aspect, l'invention concerne un produit programme d'ordinateur comprenant des instructions de code pour l'exécution d'un procédé selon le premier aspect de l'invention de routage de données par un boitier d'accès à Internet connecté à Internet via un réseau de communication filaire ; et des moyens de stockage lisibles par un équipement informatique sur lesquels un produit programme d'ordinateur comprend des instructions de code pour l'exécution d'un procédé selon le deuxième aspect de l'invention de routage de données par un boitier d'accès à Internet connecté à Internet via un réseau de communication filaire.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un dispositif d'accès à Internet via un réseau de communication mobile connu ;
- la figure 2 est un schéma d'une architecture de réseau pour la mise en oeuvre d'un procédé de routage de données selon l'invention.

### DESCRIPTION DETAILLEE

### Architecture globale

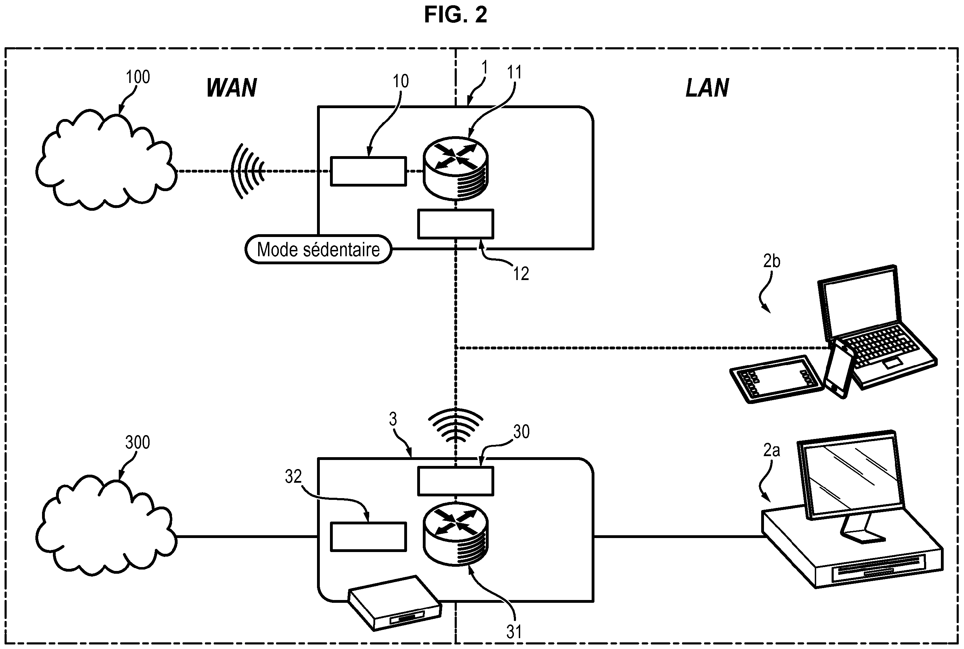

En référence à la **figure 2****,** le présent procédé est un procédé de routage de données par un boitier d'accès à Internet 3, pour un équipement 2a, 2b (cela signifie qu'il s'agit de données reçues ou envoyées par l'équipement 2a, 2b).

Par boitier d'accès Internet 3, on entend un IAD, i.e. un équipement assurant l'accès au réseau Internet dans un foyer et mettant en oeuvre des fonctions de routage.

Ce procédé vise à un renforcement d'une connectivité réseau fournie par le boitier 3, i.e. une hausse du débit et une amélioration de la qualité de service (QoS) pour la connexion de l'équipement 2a, 2b au réseau Internet via le boitier d'accès à Internet 3. Plus précisément, comme on va le voir ce procédé permet d'ouvrir une route supplémentaire pour accéder à internet depuis le boitier 3, en d'autres termes de disposer de deux interfaces WAN.

Comme expliqué précédemment, ce boitier 3 est typiquement un équipement connecté filairement (i.e. par câble) au réseau Internet via un réseau opérateur 300 de type xDSL (et particulièrement ADSL, i.e. « Asymmetric Digital Subscriber Line »). Par réseau opérateur, on entend les infrastructures de l'opérateur notamment des lignes téléphoniques et/ou optiques pour la connexion jusqu'au réseau Internet.

Le boitier 3 comprend des moyens de traitement de données 31 (un processeur), des moyens de stockage de données 32 (une mémoire de type ROM et/ou disque dur), et des moyens de communication sans fil 30 (typiquement réseau Wi-Fi). Ces moyens sont capables de générer un réseau local sans fil.

Au moins un équipement 2a, 2b est connecté localement au boitier 3. Dans l'exemple représenté sur la figure 2, l'équipement 2a est connecté au boitier 3 via une interface filaire (par exemple un câble Ethernet), alors que l'équipement 2b (par exemple un smartphone) est connecté via ledit réseau local sans fil.

L'architecture représentée comprend également un dispositif d'accès à Internet 1 connecté à Internet via un réseau de communication mobile 100. On entend par ce dispositif un routeur mobile (typiquement 4G), tel que décrit précédemment. Il comprend donc des premiers moyens de communication sans fil 10 (pour la connexion au réseau de communication mobile 100), des moyens de traitement de données 11 et des deuxièmes moyens de communication sans fil 12 (typiquement Wi-Fi), disposés dans un boitier.

La nouvelle route pour accéder à internet évoquée précédemment est une route via le réseau mobile 100, suite à une connexion entre le dispositif 1 et le boitier 3. En d'autres termes, l'objectif est de disposer d'une première interface WAN via le boitier 3 et d'une deuxième interface WAN via le dispositif 1.

### Mode station

Le présent procédé commence par une étape (a) de connexion du dispositif 1 au réseau local sans fil généré par le boitier 3. Cette connexion est particulière en ce que le réseau sans fil est bien généré par le boitier 3 (plus précisément par ses moyens de communication sans fil 30) et non pas par le dispositif 1. En d'autres termes, le dispositif 1 se connecte en tant que client à ce réseau sans fil, exactement comme l'équipement 2a (il a le même statut).

Le dispositif 1 est ainsi en mode dit « station » (STA), et non pas en mode AP comme c'était le cas dans l'art antérieur. On rappelle qu'un équipement en mode AP est adapté pour générer un réseau Wi-Fi, alors qu'un équipement en mode STA est adapté pour se connecter à un réseau Wi-Fi généré par un autre équipement (lui-même en mode AP).

De façon surprenante, ce mode STA permet pourtant au dispositif 1 de servir de point d'accès à Internet, comme on va le voir.

On a ainsi tous les avantages de la connexion sans fil entre le dispositif 1 et le boitier 3 (pas de câble requis, possibilité de placer le dispositif 1 en un endroit ou la réception du réseau de communication mobile 100 est la meilleure) sans les inconvénients (aucune bande de fréquence Wi-Fi n'est bloquée pour le trafic inter-routeurs).

Il est à noter que cette étape peut nécessiter la configuration du dispositif 1 (par exemple en le connectant filairement à un PC et en accédant à une interface de configuration, ou en utilisant WPS, i.e. le standard « Wi-Fi Protected Setup ») de sorte à renseigner un SSID et le cas échéant un mot de passe du réseau local sans fil.

### DHCP

Par connexion au réseau sans-fil de l'étape (a), on entend ouverture d'un lien physique. A ce stade, le dispositif 1 et le boitier 3 ne sont pas encore capable d'échanger des données selon des formats structurés.

Pour cela, le dispositif 1 doit se voir attribuer une adresse réseau, en particulier une adresse IP (Internet Protocol) privée.

Pour cela, est mise en oeuvre par les moyens de traitement de données 11 du dispositif, une étape d'émission d'une requête d'attribution d'une adresse réseau auprès du boitier 3. Une telle requête doit être émise de façon connue par n'importe quel périphérique entrant dans le réseau local associé au boitier 3, et est en particulier une requête Dynamic Host Control Protocol (DHCP), comme l'on va expliquer plus loin.

Cette requête est le moyen de signaler au boitier 3 que le dispositif 1 peut fournir une route complémentaire. Pour cela, la requête comprend un paramètre représentatif d'une capacité du dispositif 1 à fournir un accès à Internet.

De façon plus précise, un équipement équipé de carte réseau, mais dépourvu d'adresse IP, envoie en diffusion Broadcast un datagramme (DHCP DISCOVER) qui s'adresse au port 67 de n'importe quel serveur à l'écoute sur ce port (le boitier 3). Ce datagramme comporte entre autres une adresse physique (MAC) du client, ici le dispositif 1.

S'il est en mesure de proposer une adresse sur le réseau auquel appartient le dispositif 1, le boitier 3 en tant que serveur DHCP envoie dans une étape préalable (c0) une offre DHCP (DHCP OFFER) à l'attention du dispositif 1 en tant que client (sur son port 68), identifié par son adresse physique. Cette offre comporte l'adresse IP du boitier 3, ainsi que l'adresse IP et le masque de sous-réseau qu'il propose au dispositif 1. Il se peut que plusieurs offres soient adressées.

Le dispositif 1 retient une des offres reçues (par exemple la première), et diffuse sur le réseau un datagramme de requête DHCP (DHCP REQUEST). En d'autres termes, la requête DHCP de l'étape (c) est une réponse à l'offre DHCP. Cette requête comporte l'adresse IP du boitier 3 et celle qui vient d'être proposée au dispositif 1. Elle a pour effet de demander au boitier 3 l'assignation de cette adresse.

La requête DHCP peut en outre contenir des « options » constituée d'un code et d'un argument (les options sont référencées par le standard RFC 2132), et le paramètre représentatif d'une capacité du dispositif 1 à fournir un accès à Internet est un argument (plus précisément la chaine de caractères 'EXTWAN') d'une option 60 de la requête DHCP.

L'option 60 est en effet une option dite « Vendor class identifier » (VCI) qui permet de signaler des fonctionnalités entre équipements d'un même fabricant.

Suite à la réception de la requête, le boitier 3 élabore un datagramme d'accusé de réception (DHCP ACK pour acknowledgement) qui assigne au dispositif l'adresse IP et d'autres données telles que son masque de sous-réseau, la durée du bail de cette adresse, etc.

### Tables et routage

Dans une étape (c), des moyens de traitement de données 31 du boitier 3 ayant découvert la capacité du dispositif 1 à fournir un accès à Internet génèrent une table associée au dispositif 1 de routage via le réseau de communication mobile 100.

De base, est stockée sur les moyens de stockage de données 32 du boitier 3 au moins une table associée au boitier 3 de routage via le réseau de communication filaire 300, et on vient y ajouter ladite table associée au dispositif 1.

Une table de routage est une structure de données qui associe des préfixes à des routes. En particulier, la table de routage associée au boitier 3 contient des routes passant par le réseau filaire 300 (elle permet ainsi le routage de paquets à travers le réseau filaire 300), et la table de routage associée au dispositif 1 contient des routes passant le réseau mobile 100 (elle permet ainsi le routage de paquets à travers le réseau mobile 100).

Il est connu de gérer plusieurs tables de routage pour faire du routage avancé, par exemple en configurant les moyens de traitement de données 31 du boitier 3 (et plus précisément le noyau du système d'exploitation mis en oeuvre) grâce à iproute2.

Dans une étape (d) finale, les moyens de traitement de données 31 du boitier 3 mettent en oeuvre le routage à proprement parler desdites données. Dans la mesure où le boitier 3 dispose d'une table associée au dispositif 1, il peut décider d'aiguiller des paquets vers le dispositif 1 et le réseau mobile 100.

Ce routage se fait donc via le réseau de communication filaire 300 et/ou le réseau de communication mobile 100 en utilisant les tables de routage stockées sur les moyens de stockage de données 32 du boitier 3. Plus précisément, le boitier 3 utilise en fonction de règles l'une ou l'autre des tables de sorte à repartir les flux IP composant les données entre le réseau filaire 300 et le réseau mobile 100.

De nombreuses règles différentes (statiques ou dynamiques) peuvent être mises en oeuvre.

De façon simple, il peut être prévu que les données circulent de base via le réseau filaire 300 sauf si la connexion du boitier 3 est saturée ou défaillante, et dans ce dernier cas on recourt au réseau mobile 100. Cela donne au dispositif 1 une fonction de « backup » (en d'autres termes de relais) en cas de disfonctionnement de l'interface WAN traditionnelle.

Alternativement, des mécanismes de classification plus poussés peuvent être pris en compte, prenant en compte des aspects tel que :
- les adresses IP source ou destination ;
- La nature des données ;
- etc.

De façon particulièrement préférée, les deux interfaces WAN peuvent être utilisées simultanément pour un flux IP donné. Pour cela, les moyens de traitement de données du boitier 3 peuvent ouvrir des sessions MPTCP (« Multi-Path TCP ») et répartir des sous flux TCP (« Transport Control Protocol ») d'un flux IP entre les différentes interfaces WAN. Il s'agit du « multipath » évoqué précédemment. On rappelle que TCP est en couche 4 OSI (« Open Systems Interconnection ») et IP en couche 3 OSI.

Le boitier 3 peut implémenter un daemon proxy MPTCP dont le but est de terminer une connexion simple TCP et la continuer par une session MPTCP.

### Routeur hybride

Le dispositif 1 fonctionne comme expliqué en mode STA pour la mise en oeuvre du présent procédé. Toutefois, il est possible que le dispositif 1 soit un « routeur hybride » pouvant également présenter le mode AP évoqué précédemment.

L'idée est d'alterner un mode dit « sédentaire » (dispositif 1 à proximité du boitier 3) dans lequel il agit en mode STA, et un mode dit « nomade » dans lequel il agit en mode AP et peut fournir une connectivité internet à n'importe quel équipement 2a, 2b dès lors qu'il accède au réseau mobile 100.

En d'autres termes, le dispositif 1 est configuré pour présenter une première configuration AP (correspondant au mode nomade) dans laquelle les deuxièmes moyens de communication sans fil 12 génèrent un réseau local sans fil et une deuxième configuration STA (correspondant au mode sédentaire) dans laquelle les deuxièmes moyens de communication sans fil 12 sont aptes à se connecter à un réseau local sans fil, le procédé comprenant une étape préalable (a0) de passage de la première à la deuxième configuration du dispositif 1.

Pour réaliser ce basculement, le dispositif 1 peut comprendre un actionneur tel qu'un bouton. Cet actionneur peut être actionné par un utilisateur (de façon à ce qu'il choisisse le mode sédentaire ou nomade), mais de façon préférée le dispositif 1 peut passer d'un mode à l'autre automatiquement.

De nombreuses techniques peuvent être mises en oeuvre pour cela, mais en particulier on peut prévoir un support pour le dispositif 1, support avantageusement placé (posé sur une surface plate ou de fixé au mur) à un endroit optimal vis-à-vis du réseau mobile 100 et du réseau sans fil généré par le boitier 3 (de façon à maximiser la réception des deux réseaux)

L'insertion du dispositif 1 dans le support provoque la transition de configuration du mode nomade au mode sédentaire. De même, le retrait du dispositif 1 du support provoque la transition de configuration du mode sédentaire au mode au mode nomade. Le mode sédentaire peut être désactivé par configuration. Le dispositif 1 sera alors en mode nomade qu'il soit inséré dans son support/à proximité du boitier 3 ou pas.

De façon préférée, l'insertion dans le support est couplée avec une détection du réseau local sans fil généré par le boitier 3. En d'autres termes, l'insertion du dispositif 1 dans le support ne provoque la transition de configuration du mode nomade au mode au mode sédentaire que si le réseau sans fil est détecté. Plus précisément, il peut être prévu que l'insertion entraîne le test de détection du réseau sans fil, et qu'en cas de succès seulement le basculement de configuration (vers le mode sédentaire) est effectué.

Cela permet par exemple au dispositif 1 de rester en mode AP (et donc de continuer à fournir une connexion à Internet) en cas de non-fonctionnement du boitier 3 (ou si les moyens de communication sans fil 30 ont été coupés et qu'aucun réseau local sans fil n'est généré), quand bien même le dispositif 1 a été inséré dans le support.

L'insertion peut entraîner l'appui sur un bouton, ou déclencher un senseur magnétique, mais de façon préférée la détection de l'insertion est électrique. En effet, il peut être prévu dans le support une alimentation pour recharger électriquement le dispositif 1. L'insertion ou le retrait du routeur de son support provoque alors un événement électrique (mise en oeuvre ou non d'une recharge).

On comprendra que cet événement électrique (et/ou l'événement découverte du réseau sans fil du boitier 3) déclenche automatiquement la transition de configuration du mode nomade au mode sédentaire.

### Boitier et système

Selon un deuxième aspect est proposé un boitier 3 pour la mise en oeuvre du procédé selon le premier aspect.

Comme expliqué, ce boitier d'accès à Internet 3 connecté à Internet via un réseau de communication filaire 300 comprend des moyens de communication sans fil 30 générant un réseau local sans fil (en particulier Wi-Fi) et des moyens de stockage de données 32 sur lesquels est stockée au moins une table associée au boitier 3 de routage via le réseau de communication filaire 300, et des moyens de traitement de données 31.

Ces derniers sont configurés pour mettre en oeuvre :
- Un module de réception d'une requête d'attribution d'une adresse réseau auprès du boitier 3 (en particulier en réponse à un requête d'offre d'une adresse réseau émise par le boitier 3) depuis un dispositif d'accès à Internet 1 connecté à Internet via un réseau de communication mobile 100 et connecté audit réseau local sans fil ;
- Un module de génération et de stockage sur lesdits moyens de stockage de données 32, si la requête reçue comprend un paramètre représentatif d'une capacité du dispositif 1 à fournir un accès à Internet (comme expliqué il s'agit par exemple du paramètre 'EXTWAN' d'une option 60 d'une requête DHCP), d'une table associée au dispositif 1 de routage via le réseau de communication mobile 100 ;
- Un module de routage de données via le réseau de communication filaire 300 et/ou le réseau de communication mobile 100 en utilisant les tables de routage stockées sur les moyens de stockage de données 32.

La présente invention concerne également le système tel que représenté sur la figure 1, comprenant un boitier d'accès à Internet 3 selon le deuxième aspect et un dispositif d'accès à Internet 1 connecté à Internet via un réseau de communication mobile 100 (et éventuellement un ou plusieurs équipements 2a, 2b).

Le dispositif 1 peut présenter une première configuration AP dans laquelle les deuxièmes moyens de communication sans fil 12 génèrent un réseau local sans fil et/ou une deuxième configuration STA dans laquelle les deuxièmes moyens de communication sans fil 12 sont aptes à se connecter à un réseau local sans fil.

Dans le cas où le dispositif 1 peut présenter les deux configurations, le système 1 peut en outre comprendre un support dudit dispositif d'accès à Internet 1, le dispositif 1 étant configuré pour passer de la première configuration à la deuxième configuration lorsqu'il est placé sur ledit support (Comme expliqué, il peut détecter par exemple une recharge électrique et/ou le réseau local sans fil généré par le boitier 3).

### Produit programme d'ordinateur

Selon un quatrième et un cinquième aspects, l'invention concerne un produit programme d'ordinateur comprenant des instructions de code pour l'exécution (en particulier sur les moyens de traitement de données 31 d'un boitier d'accès à Internet 3) du procédé de routage de données par le boitier d'accès à Internet 3 connecté à Internet via un réseau de communication filaire 300, ainsi que des moyens de stockage lisibles par un équipement informatique (notamment des moyens de stockage de données 32 de ce boitier 3) sur lequel on trouve ce produit programme d'ordinateur.

## Revendications

1. Procédé de routage de données par un boitier d'accès à Internet (3) connecté à Internet via un réseau de communication filaire (300), **caractérisé en ce qu'**il comprend des étapes de :
(a) Connexion à un réseau local sans fil généré par le boitier d'accès à Internet (3), d'un dispositif d'accès à Internet (1) connecté à Internet via un réseau de communication mobile (100) ;
(b) Emission par des moyens de traitement de données (11) du dispositif, (1) d'une requête d'attribution d'une adresse réseau auprès du boitier (3), ladite requête comprenant un paramètre représentatif d'une capacité du dispositif (1) à fournir un accès à Internet ;
(c) Génération par des moyens de traitement de données (31) du boitier (3) d'une table associée au dispositif (1) de routage via le réseau de communication mobile (100), ladite table associée au dispositif (1) et au moins une table associée au boitier (3) de routage via le réseau de communication filaire (300) étant stockées sur des moyens de stockage de données (32) du boitier (3) ;
(d) Routage par les moyens de traitement de données (31) du boitier (3) desdites données via le réseau de communication filaire (300) et/ou le réseau de communication mobile (100) en utilisant les tables de routage stockées sur les moyens de stockage de données (32) du boitier (3).

2. Procédé selon la revendication 1, dans lequel ladite requête émise à l'étape (c) est une requête Dynamic Host Control Protocol (DHCP).

3. Procédé selon la revendication 2, dans lequel ledit paramètre représentatif d'une capacité du dispositif (1) à fournir un accès à Internet est un argument d'une option 60 de la requête DHCP.

4. Procédé selon la revendication 3, dans lequel ledit argument d'une option 60 de la requête DHCP est la chaine de caractères 'EXTWAN'.

5. Procédé selon l'une des revendications 1 à 4, dans lequel l'étape (c) est précédée par une étape (c0) de réception par le dispositif (1) d'une offre DHCP émise par les moyens de traitement de données (31) du boitier d'accès à Internet (3), la requête DHCP de l'étape (c) étant une réponse à l'offre DHCP.

6. Procédé selon i'une des revendications 1 à 5, dans lequel l'étape (d) comprend le choix par les moyens de traitement de données (31) du boitier (3) de l'une ou l'autre des tables en fonction de règles stockées sur les moyens de stockage de données (32) du boitier (3), de sorte à repartir entre le réseau de communication filaire (300) et le réseau de communication mobile (100) des flux IP composant les données à router.

7. Procédé selon la revendication 6, dans lequel l'étape (d) comprend l'ouverture de sessions Multi-Path Transport Control Protocol (MPTCP) par les moyens de traitement de données (31) du boitier (3) de sorte à répartir entre le réseau de communication filaire (300) et le réseau de communication mobile (100) des sous-flux TCP des flux IP composant les données à router.

8. Procédé selon l'une des revendications 1 à 7, dans lequel le dispositif (1) comprend des premiers moyens de communication sans fil (10) avec le réseau de communication mobile (100) et des deuxièmes moyens de communication sans fil (12), le dispositif (1) étant configuré pour présenter une première configuration (AP) dans laquelle les deuxièmes moyens de communication sans fil (12) génèrent un réseau local sans fil et une deuxième configuration (STA) dans laquelle les deuxièmes moyens de communication sans fil (12) sont aptes à se connecter à un réseau local sans fil, le procédé comprenant une étape préalable (a0) de passage de la première à la deuxième configuration du dispositif (1).

9. Procédé selon la revendication 8, dans lequel le dispositif (1) comprend des moyens de détection d'une insertion sur un support, l'étape (a0) étant mise en oeuvre lorsque ladite insertion est détectée

10. Boitier d'accès à Internet (3) connecté à Internet via un réseau de communication filaire (300), comprenant des moyens de communication sans fil (30) générant un réseau local sans fil et des moyens de stockage de données (32) sur lesquels est stockée au moins une table associée au boitier (3) de routage via le réseau de communication filaire (300), **caractérisé en ce qu'**il comprend en outre des moyens de traitement de données (31) configurés pour mettre en oeuvre :
- Un module de réception d'une requête d'attribution d'une adresse réseau auprès du boitier (3) depuis un dispositif d'accès à Internet (1) connecté à Internet via un réseau de communication mobile (100) et connecté audit réseau local sans fil ;
- Un module de génération et de stockage sur lesdits moyens de stockage de données (32), si la requête reçue comprend un paramètre représentatif d'une capacité du dispositif (1) à fournir un accès à Internet, d'une table associée au dispositif (1) de routage via le réseau de communication mobile (100) ;
- Un module de routage de données via le réseau de communication filaire (300) et/ou le réseau de communication mobile (100) en utilisant les tables de routage stockées sur les moyens de stockage de données (32).

11. Système comprenant un boîtier d'accès à Internet (3) selon la revendication 10 et un dispositif d'accès à Internet (1) connecté à Internet via un réseau de communication mobile (100), le dispositif (1) comprenant des premiers moyens de communication sans fil (10) avec le réseau de communication mobile (100) et des deuxièmes moyens de communication sans fil (12), le dispositif (1) présentant une première configuration (AP) dans laquelle les deuxièmes moyens de communication sans fil (12) génèrent un réseau local sans fil et une deuxième configuration (STA) dans laquelle les deuxièmes moyens de communication sans fil (12) sont aptes à se connecter à un réseau local sans fil.

12. Système selon la revendication 11, comprenant en outre un support dudit dispositif d'accès à Internet (1), le dispositif (1) étant configuré pour passer de la première, configuration à la deuxième configuration lorsqu'il est placé sur ledit support.

13. Système selon la revendication 12, dans lequel le dispositif (1) est configuré pour ne passer de la première configuration à la deuxième configuration que s'il détecte un réseau local sans fil généré par les moyens de communication sans fil (30) dudit boitier d'accès à Internet (3).

14. Produit programme d'ordinateur comprenant des instructions de code pour l'exécution d'un procédé selon l'une des revendications 1 à 9 de routage de données par un boitier d'accès à Internet (3) connecté à Internet via un réseau de communication filaire (300).

15. Moyens de stockage lisibles par un équipement informatique sur lesquels un produit programme d'ordinateur comprend des instructions de code pour l'exécution d'un procédé selon l'une des revendications 1 à 9 de routage de données par un boîtier d'accès à Internet (3) connecté à Internet via un réseau de communication filaire (300).

## Patentansprüche

1. Verfahren zum Routen von Daten durch einen Internetzugangskasten (3), der mit dem Internet über ein drahtgebundenes Kommunikationsnetz (300) verbunden ist, **dadurch gekennzeichnet, dass** es die Schritte umfasst:
(a) Verbinden mit einem lokalen drahtlosen Netz, das von dem Internetzugangskasten (3) verwaltet wird, einer Internetzugangsvorrichtung (1), die mit dem Internet über ein mobiles Kommunikationsnetz (100) verbunden ist,
(b) Senden, durch Datenverarbeitungsmittel (11) der Vorrichtung (1), einer Zuweisungsanfrage einer Netzwerkadresse an den Kasten (3), wobei die Anfrage einen Parameter umfasst, der für eine Fähigkeit der Vorrichtung (1), einen Internetzugang bereitzustellen, repräsentativ ist,
(c) Erzeugen, durch Datenverarbeitungsmittel (31) des Kastens (3), einer der Routingvorrichtung (1) zugeordneten Tabelle über das mobile Kommunikationsnetz (100), wobei die der Vorrichtung (1) zugeordnete Tabelle und mindestens eine dem Routingkasten (3) zugeordnete Tabelle über das drahtgebundene Kommunikationsnetz (300) in Datenspeichermitteln (32) des Kastens (3) gespeichert sind,
(d) Routen, durch die Datenverarbeitungsmittel (31) des Kastens (3), der Daten über das drahtgebundene Kommunikationsnetz (300) und/oder das mobile Kommunikationsnetz (100) bei Verwendung der in den Datenspeichermitteln (32) des Kastens (3) gespeicherten Routingtabellen.

2. Verfahren nach Anspruch 1, wobei die in Schritt (c) gesendete Anfrage eine Dynamic Host Control Protocol-Anfrage (DHCP) ist.

3. Verfahren nach Anspruch 2, wobei der repräsentative Parameter einer Fähigkeit der Vorrichtung (1) ist, einen Internetzugang bereitzustellen, ein Argument einer Option 60 der DHCP-Anfrage ist.

4. Verfahren nach Anspruch 3, wobei das Argument einer Option 60 der DHCP-Anfrage die Zeichenkette 'EXTWAN' ist.

5. Verfahren nach einem der Ansprüche 1 bis 4, wobei vor dem Schritt (c) ein Empfangsschritt (c0) durch die Vorrichtung (1) eines DHCP-Angebots, gesendet durch die Datenverarbeitungsmittel (31) des Internetzugangskastens (3), durchgeführt wird, wobei die DHCP-Anfrage von Schritt (c) eine Antwort auf das DHCP-Angebot ist.

6. Verfahren nach einem der Ansprüche 1 bis 5, wobei der Schritt (d) die Auswahl durch die Datenverarbeitungsmittel (31) des Kastens (3) der einen oder der anderen der Tabellen in Abhängigkeit von den in den Datenspeichermitteln (32) des Kastens (3) gespeicherten Regeln derart umfasst, dass zwischen dem drahtgebundenen Kommunikationsnetz (300) und dem mobilen Kommunikationsnetz (100) IP-Ströme verteilt werden, die die zu routenden Daten bilden.

7. Verfahren nach Anspruch 6, wobei Schritt (d) die Eröffnung von Multi-Path Transport Control Protocol-Sitzungen (MPTCP) durch die Datenverarbeitungsmittel (31) des Kastens (3) derart umfasst, dass zwischen dem drahtgebundenen Kommunikationsnetz (300) und dem mobilen Kommunikationsnetz (100) TCP-Unterströme der IP-Ströme verteilt werden, die die zu routenden Daten bilden.

8. Verfahren nach einem der Ansprüche 1 bis 7, wobei die Vorrichtung (1) erste drahtlose Kommunikationsmittel (10) mit dem mobilen Kommunikationsnetz (100) und zweite drahtlose Kommunikationsmittel (12) umfasst, wobei die Vorrichtung (1) konfiguriert ist, um eine erste Konfiguration (AP) aufzuweisen, in welcher die zweiten drahtlosen Kommunikationsmittel (12) ein lokales drahtloses Netz erzeugen, und eine zweite Konfiguration (STA), in welcher die zweiten drahtlosen Kommunikationsmittel (12) imstande sind, sich mit einem lokalen drahtlosen Netz zu verbinden, wobei das Verfahren einen vorherigen Übergangsschritt (a0) aus der ersten in die zweite Konfiguration der Vorrichtung (1) umfasst.

9. Verfahren nach Anspruch 8, wobei die Vorrichtung (1) Detektionsmittel eines Einsetzens auf einen Träger umfasst, wobei der Schritt (a0) umgesetzt wird, wenn das Einsetzen ermittelt wird.

10. Internetzugangskasten (3), der mit dem Internet über ein drahtgebundenes Kommunikationsnetz (300) verbunden ist, umfassend drahtlose Kommunikationsmittel (30), die ein lokales drahtloses Netz erzeugen, und Datenspeichermittel (32), auf denen mindestens eine dem Routingkasten (3) über das drahtgebundene Kommunikationsnetz (300) zugeordnete Tabelle gespeichert ist, **dadurch gekennzeichnet, dass** er ferner Datenverarbeitungsmittel (31) umfasst, die konfiguriert sind, um umzusetzen:
- ein Empfangsmodul einer Zuweisungsanfrage einer Netzwerkadresse an den Kasten (3) ab einer mit dem Internet über ein mobiles Kommunikationsnetz (100) verbundenen und mit dem lokalen drahtlosen Netz verbundenen Internetzugangsvorrichtung (1),
- ein Erzeugungs- und Speichermodul in den Datenspeichermitteln (32), wenn die empfangene Anfrage einen repräsentativen Parameter einer Fähigkeit der Vorrichtung (1) umfasst, einen Internetzugang bereitzustellen, einer der Routingvorrichtung (1) zugeordneten Tabelle über das mobile Kommunikationsnetz (100),
- ein Routingmodul von Daten über das drahtgebundene Kommunikationsnetz (300) und/oder das mobile Kommunikationsnetz (100) unter Benutzung der in den Datenspeichermitteln (32) gespeicherten Routingtabellen.

11. System, umfassend einen Internetzugangskasten (3) nach Anspruch 10 und eine mit dem Internet über ein mobiles Kommunikationsnetz (100) verbundene Internetzugangsvorrichtung (1), wobei die Vorrichtung (1) erste drahtlose Kommunikationsmittel (10) mit dem mobilen Kommunikationsnetz (100) und zweite drahtlose Kommunikationsmittel (12) umfasst, wobei die Vorrichtung (1) eine erste Konfiguration (AP), in welcher die zweiten drahtlosen Kommunikationsmittel (12) ein lokales drahtloses Netz erzeugen, und eine zweite Konfiguration (STA), in welcher die zweiten drahtlosen Kommunikationsmittel (12) imstande sind, sich mit einem lokalen drahtlosen Netz zu verbinden, aufweist.

12. System nach Anspruch 11, umfassend ferner einen Träger der Internetzugangsvorrichtung (1), wobei die Vorrichtung (1) konfiguriert ist, um aus der ersten Konfiguration in die zweite Konfiguration zu wechseln, wenn sie auf dem Träger platziert ist.

13. System nach Anspruch 12, wobei die Vorrichtung (1) konfiguriert ist, um nicht aus der ersten Konfiguration in die zweite Konfiguration zu wechseln, wenn sie ein lokales drahtloses Netz ermittelt, das von den drahtlosen Kommunikationsmitteln (30) des Internetzugangskastens (3) verwaltet wird.

14. Rechnerprogrammprodukt, umfassend Codeinstruktionen für die Ausführung eines Datenroutingverfahrens nach einem der Ansprüche 1 bis 9 durch einen Internetzugangskasten (3), der mit dem Internet über ein drahtgebundenes Kommunikationsnetz (300) verbunden ist.

15. Speichermittel, lesbar durch eine Informatikvorrichtung, bei denen ein Rechnerprogrammprodukt Codeinstruktionen für die Ausführung eines Datenroutingverfahrens nach einem der Ansprüche 1 bis 9 durch einen Internetzugangskasten (3) umfasst, der mit dem Internet über ein drahtgebundenes Kommunikationsnetz (300) verbunden ist.

## Claims

1. A method for routing data through an Internet access unit (3) connected to the Internet via a wired communication network (300), **characterized in that** it comprises steps of:
(a) Connecting, to a wireless LAN (Local Area Network) generated by the Internet access unit (3), an Internet access device (1) connected to the Internet via a mobile communication network (100);
(b) Issuing, by data processing means (11) of the device (1), a request for assignment of a network address to the unit (3), said request comprising a parameter representative of a capacity of the device (1) to provide access to the Internet;
(c) Generating, by data processing means (31) of the unit (3), a table associated with the routing device (1) via the mobile communication network (100), said table associated with the device (1) and at least one table associated with the routing unit (3) via the wired communication network (300) being stored on data storage means (32) of the unit (3);
(d) Routing, by the data processing means (31) of the unit (3), said data via the wired communication network (300) and/or the mobile communication network (100) using the routing tables stored on the data storage means (32) of the unit (3).

2. The method according to claim 1, wherein said request issued in step (c) is a Dynamic Host Control Protocol (DHCP) request.

3. The method according to claim 2, wherein said parameter representative of a capacity of the device (1) to provide access to the Internet is an argument of an option 60 of the DHCP request.

4. The method according to claim 3, wherein said argument of an option 60 of the DHCP request is the character string 'EXTWAN'.

5. The method according to one of claims 1 to 4, wherein step (c) is preceded by a step (c0) of reception by the device (1) of a DHCP offer issued by the data processing means (31) of the Internet access unit (3), the DHCP request of step (c) being a response to the DHCP offer.

6. The method according to one of claims 1 to 5, wherein step (d) comprises the selection by the data processing means (31) of the unit (3) of either of the tables depending on rules stored on the data storage means (32) of the unit (3), so as to distribute between the wired communication network (300) and the mobile communication network (100) IP flows composing the data to be routed.

7. The method according to claim 6, wherein step (d) comprises the opening of Multi-Path Transport Control Protocol (MPTCP) sessions by the data processing means (31) of the unit (3) so as to distribute between the wired communication network (300) and the mobile communication network (100) TCP sub-flows of the IP flows composing the data to be routed.

8. The method according to one of claims 1 to 7, wherein the device (1) comprises first wireless communication means (10) with the mobile communication network (100) and second wireless communication means (12), the device (1) being configured to have a first configuration (AP) in which the second wireless communication means (12) generates a wireless LAN and a second configuration (STA) in which the second wireless communication means (12) are capable of connecting to a wireless LAN, the method comprising a prior step (a0) of transition from the first to the second configuration of the device (1).

9. The method according to claim 8, wherein the device (1) comprises means for detecting insertion on a support, step (a0) being implemented when said insertion is detected.

10. An Internet access unit (3) connected to the Internet by a wired communication network (300), comprising wireless communication means (30) generating a wireless LAN and data storage means (32) on which is stored at least one table associated with the routing unit (3) via the wired communication network (300), **characterized in that** it further comprises data processing means (31) configured to implement:
- A module for receiving an assignment request of a network address to the unit (3) from an Internet access device (1) connected to the Internet via a mobile communication network (100) and connected to said wireless LAN;
- A module for generating and storing on said data storage means (32), if the request received comprises a parameter representative of a capacity of the device (1) to provide access to the Internet, a table associated with the routing device (1) via the mobile communication network (100);
- A module for routing data via the wired communication network (300) and/or the mobile communication network (100) using the routing tables stored on the data storage means (32).

11. A system comprising an Internet access unit (3) according to claim 10 and an Internet access device (1) connected to the Internet via a mobile communication network (100), the device (1) comprising first wireless communication means (10) with the mobile communication network (100) and second wireless communication means (12), the device (1) having a first configuration (AP) in which the second wireless communication means (12) generates a wireless LAN and a second configuration (STA) in which the second wireless communication means (12) are capable of connecting to a wireless LAN.

12. The system according to claim 11, further comprising a support for said Internet access device (1), the device (1) being configured to move from the first configuration to the second configuration when it is placed on said support.

13. The system according to claim 12, wherein the device (1) is configured to move from the first configuration to the second configuration only if it detects a wireless LAN generated by the wireless communication means (30) of said Internet access unit (3) .

14. A computer program product comprising code instructions for executing a method, according to one of claims 1 to 9, for routing data by an Internet access unit (3) connected to the Internet via a wired communication network (300).

15. Storage means readable by computer equipment on which a computer program product comprises code instructions for executing a method, according to one of claims 1 to 9, for routing data by an Internet access unit (3) connected to the Internet via a wired communication network (300).
